# FASCICULE DE BREVET EUROPEEN

(11) **EP 0 385 825 B1**
(45) Date de publication et mention de la délivrance du brevet: **26.10.1994**
(21) Numéro de dépôt: 90400422.3
(22) Date de dépôt: 15.02.1990
(51) Int. Cl.: B23Q 16/12, B25J 13/08, G01B 11/00

(54) **Système pour la matérialisation d'un point dans l'espace, ses applications et outillage pour ledit système**
System zur Verwirklichung eines Punktes im Raum, seine Anwendungen und Werkzeugausrüstung für das genannte System
System for the materialization of a point in a space, its applications and tooling equipment for said system

(30) Priorité: 21.02.1989 FR 8902243
(43) Date de publication de la demande: 05.09.1990
(73) Titulaire: EUROCOPTER FRANCE, F-13725 Marignane Cédex (FR)
(72) Inventeur: Schwarz, Jean-Claude, F-13160 Le Puy Sainte Reparade (FR)
(74) Mandataire: Bonnetat, Christian

(56) Documents cités:
- US-A- 4 138 824
- V.D.I. ZEITSCHRIFT vol. 129, no. 3, Mars 1987, pages 57-62, Düsseldorf, RFA; A. BEHRENS et al.:"Positioniergenauigkeit von Industrierobotern". page 58
- MICROTECNIC no. 3. 1984, pages 40-43, Zürich, CH, A. LARDELLI, :"Ein elektronisches Mess und Berechnungssystem für industrielle Anwendungen"*

## Description

La présente invention concerne un outillage pour la matérialisation de points dans l'espace, ainsi que ses utilisations, notamment pour la mise en place de repères de positionnement ou de pièces, sur des bâtis d'assemblage mécanique.

On sait que, dans les assemblages mécaniques complexes, par exemple en construction de matériels aéronautiques, pour mettre en place, de façon précise, un ensemble structural par rapport à un autre, il est nécessaire d'amener en alignement ou en coïncidence, des points de référence liés auxdits ensembles structuraux.

On sait de plus que, pour faciliter la mise en place desdits ensembles structuraux les uns par rapport aux autres, il est usuel de matérialiser lesdits points de référence par des repères de positionnement. Bien entendu, il est alors nécessaire de régler avec précision la position desdits repères de positionnement sur lesdits points de référence. Jusqu'à présent, le réglage des points de référence des bâtis de fabrication ou d'assemblage dans les ateliers est réalisé par la mise en place de gabarits et d'étalons sur lesdits bâtis, pour matérialiser de façon précise ces points de référence.

Ainsi, sur des bâtis nouveaux, ces gabarits et étalons permettent de fixer la position de chacun de ces points de référence au départ d'une fabrication, et sur les bâtis en service, ils permettent de vérifier périodiquement la constance de positionnement de ces points de référence et, si nécessaire, de les réaligner sur leur position d'origine.

Cette méthode de réglage impose de fabriquer de nombreux et encombrants gabarits ou étalons et nécessite une gestion lourde et coûteuse de tous ces outillages pour le contrôle périodique des bâtis.

Par ailleurs, par le document MICROTECNIC, n° 3, 1984, pages 40-43, ZÜRICH, CH, A-LARDELLI "Ein elektronisches Mess- und Berechnungssystem für Industrielle Anwendungen", on connaît déjà un procédé de mesure de coordonnées mettant en oeuvre un appareil de visée optique. Pour marquer les points, dont les coordonnées ont ainsi été mesurées, ce procédé connu prévoit de simples marques autocollantes. Il en résulte des marquages peu précis et approximatifs.

La présente invention a pour objet un outillage qui, associé à un appareil de visée optique, permet d'aligner, aisément et de façon précise, des points de référence liés à des ensembles structuraux à aligner, et, lorsque ces points de référence sont matérialisés par des repères de positionnement, de régler facilement et de façon précise ces derniers sur lesdits points de référence. Elle permet notamment de remplacer le processus connu, rappelé en premier lieu, de positionnement et de vérification desdits repères par une méthode de réglage optique informatisé pour la mise en oeuvre duquel ont été définis et réalisés des outillages opérationnels simples et réutilisables pour tous les réglages applicables en atelier. On évite ainsi les inconvénients liés à la diversité et à la pluralité des gabarits et étalons de la technique antérieure.

A cette fin, selon l'invention, l'outillage permettant de matérialiser un point dans l'espace est caractérisé en ce qu'il comporte un châssis, dont au moins une partie est mobile, et une rotule hémisphérique montée dans un siège sphérique concave, solidaire de ladite partie mobile du châssis, le centre de ladite rotule étant marqué.

Ainsi, comme cela sera expliqué plus amplement par la suite, il est possible d'amener, par approximations successives, le centre de ladite rotule en coïncidence avec ledit point, grâce à l'usage d'un appareil de visée optique connu.

Pour arriver jusqu'à la coïncidence parfaite, il est nécessaire de déterminer, pour chaque étape intermédiaire, la différence entre les coordonnées dudit centre et celles dudit point à matérialiser. Pour faciliter les calculs, il est avantageux que ledit appareil de visée optique soit constitué par un système de mesure à distance informatique pourvu de théodolites électroniques reliés à un calculateur. On connaît de nombreux systèmes de mesure à distance informatiques, susceptibles d'être utilisés pour la mise en oeuvre de l'invention. De tels systèmes sont par exemple fabriqués et vendus par la société américaine HEWLETT PACKARD, ainsi que par les sociétés suisses WILD HEERBRUGG et KERN S.A. et la société allemande ERNST LEITZ WETZLAR. Ils comportent généralement deux théodolites électriques reliés à un calculateur spécifique.

Pour amener progressivement le centre de ladite rotule en coïncidence avec le point à matérialiser, il est avantageux que la partie mobile du châssis soit constituée par une table à déplacements croisés, généralement appelée table X Y Z.

On remarquera que théoriquement, pour une position déterminée dudit siège, le centre de ladite rotule occupe une position fixe dans l'espace, quelle que soit l'orientation de ladite rotule par rapport audit siège.

De façon à ce que ce résultat soit obtenu pratiquement, ladite rotule hémisphérique est pressée élastiquement contre son siège. On peut prévoir des moyens permettant de régler la pression élastique de ladite rotule hémisphérique contre son siège, de sorte que ladite rotule peut, selon les besoins, soit être orientée par rapport audit siège, soit au contraire occuper une position fixe par rapport à celui-ci. Il peut être également avantageux que ladite rotule hémisphérique soit montée de façon amovible dans ledit siège.

Avantageusement, l'outillage selon l'invention peut être utilisé pour la mise en place d'un repère de positionnement ponctuel porté par un support. Dans ce cas, la partie de ladite rotule hémisphérique portant la marque du centre de celle-ci est prévue amovible, de façon à pouvoir être remplacée par ledit support du repère de positionnement de telle manière que ce repère se trouve à l'emplacement du centre de ladite rotule. Il est alors avantageux que ladite partie amovible de la rotule hémisphérique se présente sous la forme d'un disque et que ledit support dudit repère de positionnement se présente sous la forme d'une plaque, de même épaisseur que ledit disque.

De façon semblable, l'outillage selon l'invention permet de positionner un axe orienté défini par deux repères de positionnement ponctuels portés par un support commun. On utilise alors deux outillages et, après avoir amené les centres des rotules desdits outillages aux points que doivent occuper respectivement lesdits repères ponctuels de positionnement du support dudit axe orienté, on substitue ledit support commun matérialisant l'axe orienté aux parties amovibles desdites rotules de façon que chacun desdits repères de positionnement se trouve à l'emplacement du centre de la rotule correspondante.

De façon semblable également, l'outillage selon l'invention permet de positionner un ensemble structural dont la position est définie par trois repères de positionnement ponctuels portés par ledit ensemble structural. On utilise alors trois outillages et, après avoir amené les centres des rotules desdits outillages aux points que doivent occuper respectivement les trois repères de positionnement ponctuels dudit ensemble structural, on substitue ledit ensemble aux parties amovibles desdites rotules de façon que chacun desdits repères de positionnement se trouve à l'emplacement du centre de la rotule correspondante.

On remarquera que, grâce à l'invariabilité de position du centre des rotules par rapport à l'orientation de celles-ci, il est alors possible de modifier l'orientation de certaines desdites rotules pour les adapter aux parties dudit support commun sur lesquelles elles sont fixées.

Pour pouvoir matérialiser un plan de référence passant par un point dont les coordonnées sont connues, on prévoit, selon l'invention, que ladite rotule hémisphérique est solidaire de deux bras, dont les extrémités libres portent chacune une marque de visée. Ainsi, lesdites marques peuvent définir un plan à matérialiser en coopération avec le centre de ladite rotule qui, lui, définit ledit point par lequel doit passer ledit plan.

De préférence, on prévoit alors des moyens pour commander l'orientation de l'axe de symétrie de la rotule par rapport à son siège. Il est avantageux que lesdites marques de visée définissent, avec ledit centre de la rotule, un plan diamétral de symétrie pour celle-ci. L'une des marques peut alors se trouver sur l'axe de symétrie de ladite rotule et l'autre desdites marques peut se trouver sur un axe orthogonal audit axe de symétrie et passant par le centre de la rotule.

Si l'on désire mettre en place, de façon précise, un organe de référence, on prévoit une face de référence, solidaire de ladite rotule et susceptible de porter ledit organe de référence. Puisque la face de référence est solidaire de la rotule, son plan est lié à celui du plan déterminé par le centre de la rotule et par lesdites marques et, par suite, la mise en place de ladite face peut être obtenue par celle de ce dernier plan.

Les figures du dessin annexé feront bien comprendre comment l'invention peut être réalisée. Sur ces figures, des références identiques désignent des éléments semblables.

La figure 1 est une vue schématique illustrant la mise en oeuvre de l'outillage conforme à la présente invention.

Les figures 2, 3 et 4 sont respectivement des vues de l'arrière, de côté et du dessous d'un premier mode de réalisation de l'outillage à rotule selon l'invention.

La figure 5 est une vue éclatée, en coupe, d'un exemple de montage de rotule, plus particulièrement destiné à la mise en place d'un repère plan et comportant une rotule en deux parties.

La figure 6 est une vue de face du siège de la rotule.

La figure 7 est une vue de face de la partie amovible de la rotule.

La figure 8 est une vue de face de la partie sphérique de la rotule.

La figure 9 est, à échelle agrandie, une coupe selon la ligne IX-IX de la figure 8.

Les figures 10, 11 et 12 illustrent la mise en place d'un support portant trois repères de positionnement ponctuels.

La figure 13 est une vue en perspective d'un second mode de réalisation d'un outillage selon l'invention, permettant de définir un plan.

La figure 14 illustre la mise en oeuvre de l'outillage de la figure 13 à la mise en place d'un organe de repère.

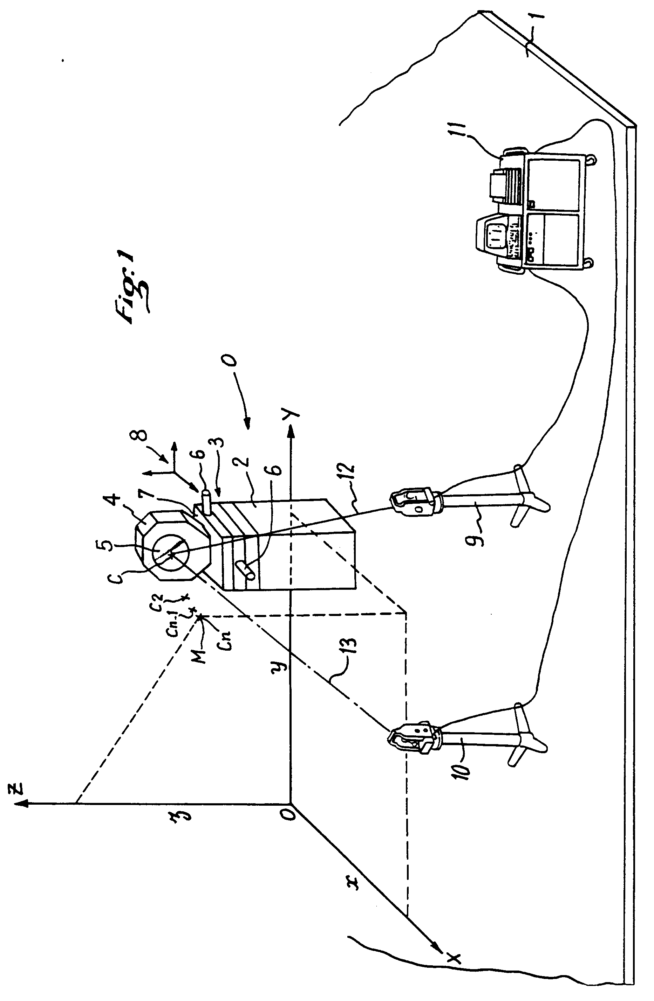

Sur la figure 1, on a représenté un support fixe 1, par exemple un plancher, le sol, etc ... et un système d'axes de références OX, OY et OZ, dans lequel on connaît les coordonnées x, y et z d'un point M. Sur le support 1, repose un outillage O pourvu d'un châssis 2 dont une partie 3 est constituée d'une table à déplacements croisés (table X Y Z) portant le siège 4 d'une rotule hémisphérique 5. L'ensemble de la table 3, du siège 4 et de la rotule 5 sera décrit en détail par la suite. La table 3 comporte des organes de manoeuvre 6 permettant de communiquer à son plateau supérieur 7 (et donc au siège 4 et à la rotule 5) des déplacements (symbolisés par le trièdre 8) par rapport aux axes OX, OY et OZ et le centre C de la rotule est marqué, par exemple par une mire rapportée, une tache ou une empreinte.

Par ailleurs, on prévoit un appareil informatique de mesure à distance comportant deux théodolites électroniques 9 et 10 et un calculateur 11, susceptible de déterminer les coordonnées d'un point visé en commun par lesdits théodolites.

La mise en oeuvre de l'outillage selon l'invention, représenté schématiquement sur la figure 1, est alors la suivante.

Tout d'abord, on amène le châssis 2 et les éléments 3 à 7 qu'il porte dans une position telle que le centre C se trouve au voisinage d'un point M à matérialiser. Ensuite, on vise le centre C de la rotule 5 à l'aide des théodolites 9 et 10 (lignes de visée 12 et 13) et on détermine, grâce au calculateur 11, les coordonnées x1, y1 et z1 dudit centre C. On comprendra que, sauf hasard peu probable, les coordonnées x1, y1 et z1 mesurées du centre C sont différentes des coordonnées x, y et z du point M. Ces coordonnées x1, y1, z1 et x, y et z sont comparées deux à deux par le calculateur 11 et on agit alors manuellement sur les organes de manoeuvre 6, dans les sens appropriés pour diminuer les écarts x-x1, y-y1 et z-z1, c'est-à-dire pour rapprocher le centre C du point M à matérialiser. Après une première action sur lesdits organes de manoeuvre 6, le centre C occupe donc une position C2. On vise alors le centre C, en position C2, au moyen des théodolites 9 et 10 et on examine les nouvelles coordonnées x2, y2 et z2 mesurées. Celles-ci sont de nouveau comparées aux coordonnées x, y et z du point M et, au besoin, on agit de nouveau sur les organes 6 pour rapprocher encore plus le centre C du point M. On effectue un nouveau réglage pour que le centre C occupe une nouvelle position plus proche de M.

On comprendra aisément que, par approximations successives, il est possible d'obtenir pour le centre C, à la fin d'une n^{ième} manoeuvre des organes 6, une position Cn telle que les coordonnées correspondantes mesurées xn, yn et zn soient respectivement égales à x, y et z. A ce moment, le centre C occupe rigoureusement la place du point M, qu'il matérialise alors.

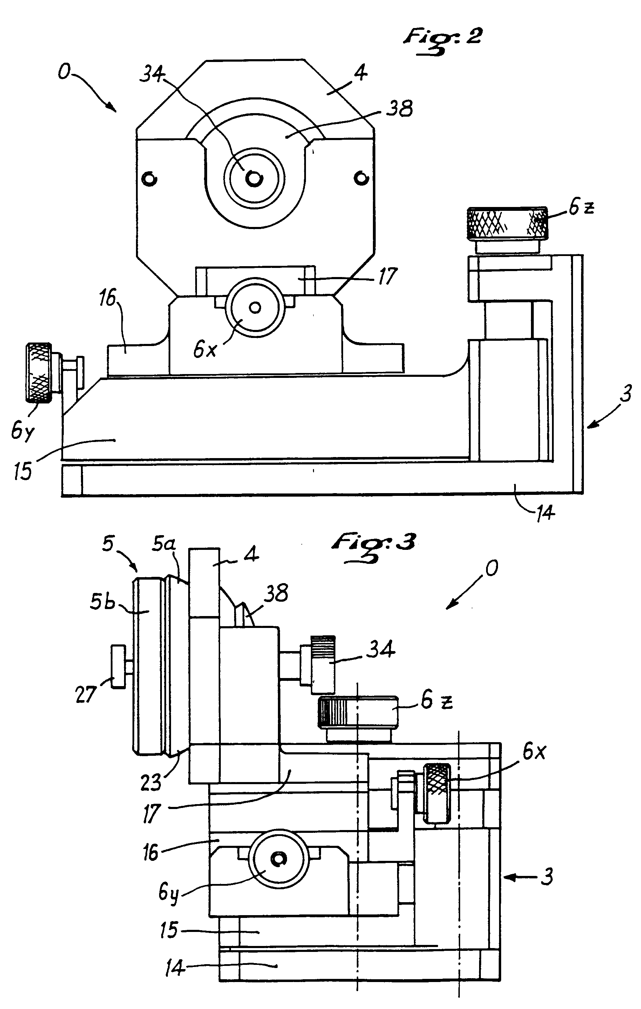

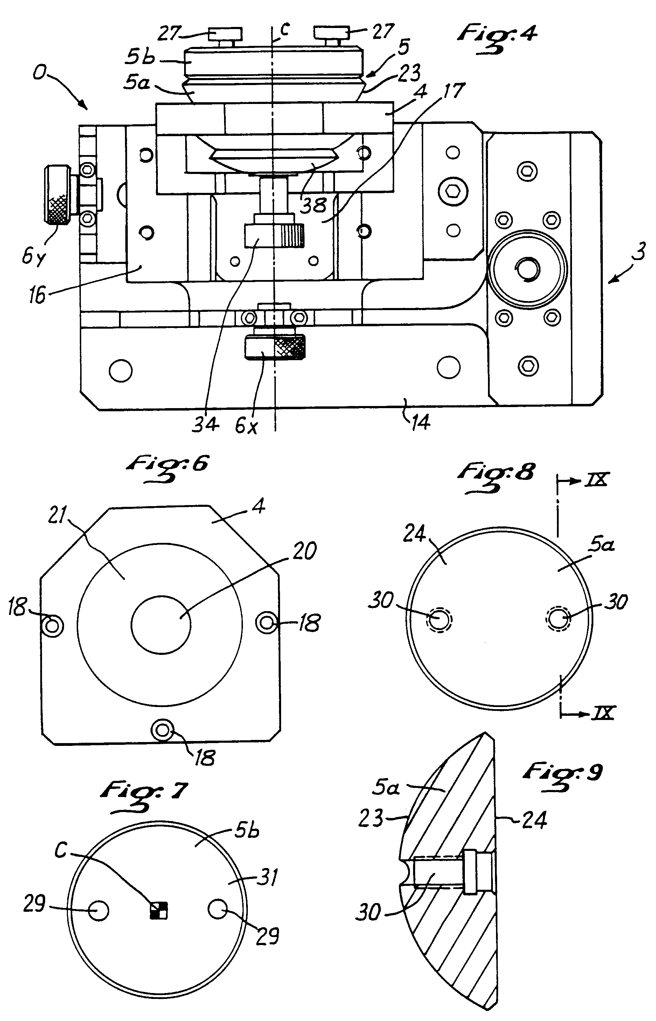

Le mode de réalisation d'outillage à rotule O selon l'invention, illustré par les figures 2 à 4, comporte, comme cela a été décrit ci-dessus, une table 3 à déplacements croisés et un ensemble siège 4-rotule 5.

La table 3 peut être de tout type connu. Celle représentée sur les figures comporte un socle 14 (destiné à former le châssis 2 ou à être disposé sur un châssis 2), un plateau 15 monté sur ledit socle 14 de façon à être mobile parallèlement à l'axe OZ (sous l'action d'un organe de manoeuvre 6 portant la référence 6Z), un chariot 16 monté coulissant sur le plateau 15 de façon à être mobile parallèlement à une première direction orthogonale à l'axe OZ (sous l'action d'un organe de manoeuvre 6 portant la référence 6Y) et un chariot 17 monté coulissant sur le chariot 16 de façon à être mobile parallèlement à une seconde direction orthogonale à l'axe OZ (sous l'action d'un organe de manoeuvre 6 portant la référence 6X).

Le siège sphérique 4 est fixé de toute façon appropriée sur le chariot 17, par exemple à l'aide de vis (non représentées) se vissant dans ledit chariot et traversant ledit siège par des trous 18 (voir les figures 5 et 6). Il comporte une paroi sphérique 19, percée en son centre d'une ouverture 20 et délimitant, du côté concave, une cuvette sphérique 21 et, du côté convexe, une saillie sphérique 22. Les surfaces sphériques de la cuvette 21 et de la saillie 22 sont concentriques.

La rotule hémisphérique 5 représentée est constituée de deux parties 5a et 5b, assemblées l'une à l'autre. La partie 5a comporte une surface sphérique 23, de même diamètre que la cuvette sphérique 21. La partie 5b présente la forme d'un disque plat, susceptible d'être solidarisé de la face plane 24 de la partie sphérique 5a, par l'intermédiaire de tenons 25, pourvus d'extrémités filetées 26 et commandés par des têtes de manoeuvre 27 susceptibles d'être solidarisées de l'autre extrémité 28. Les tenons 25 traversent à frottement doux la partie 5b par les trous 29 et se vissent, par leurs extrémités filetées 26, dans des trous filetés 30 de la partie sphérique 5a, débouchant dans ladite face plane 24. Le centre C de la rotule hémisphérique 5 est matérialisé sur la face 31 de la partie 5b, opposée à la face plane 21 de la partie 5a.

Dans sa partie sphérique, la partie 5a est percée d'un trou fileté 32, dans lequel peut se visser une vis 33, traversant l'ouverture 20 et de plus petit diamètre que celle-ci. Une tête de manoeuvre 34 est prévue à une extrémité 35 de ladite vis 33, qui comporte un épaulement 36 servant d'appui à une extrémité d'un ressort 37. On prévoit de plus une rondelle sphérique 38, dont la face sphérique concave 39 a le même diamètre que la saillie sphérique 22. Un trou central 40 permet le passage de la vis 33 à travers ladite rondelle 38.

Ainsi, grâce à la coopération du trou fileté 32, de la vis 33 et du ressort 37, traversé par la vis 33 et interposé entre la rondelle 38 et l'épaulement 36, la surface sphérique 23 de la partie 5a est pressée élastiquement contre la cuvette sphérique 21 du siège 4. Par ailleurs, grâce, d'une part, à la rondelle sphérique 38, dont la face concave sphérique 39 s'appuie sur la saillie sphérique 22 du siège 4 et, d'autre part, au fait que le diamètre de l'ouverture 20 est grand par rapport à celui de la vis 33, la rotule 5 peut tourner de façon limitée dans son siège 4, lorsque la pression exercée par le ressort comprimé 37 n'est pas trop élevée. En revanche, si la vis 33 est suffisamment vissée dans la partie 5a, la compression du ressort 37 empêche tout mouvement de la rotule 5 par rapport au siège 4.

On remarquera de plus que, puisque l'ensemble des parties 5a et 5b forme une rotule hémisphérique, le centre C occupe toujours la même position, quelle que soit l'orientation de ladite rotule par rapport au siège (ceci est représenté en tirets mixtes sur la figure 5).

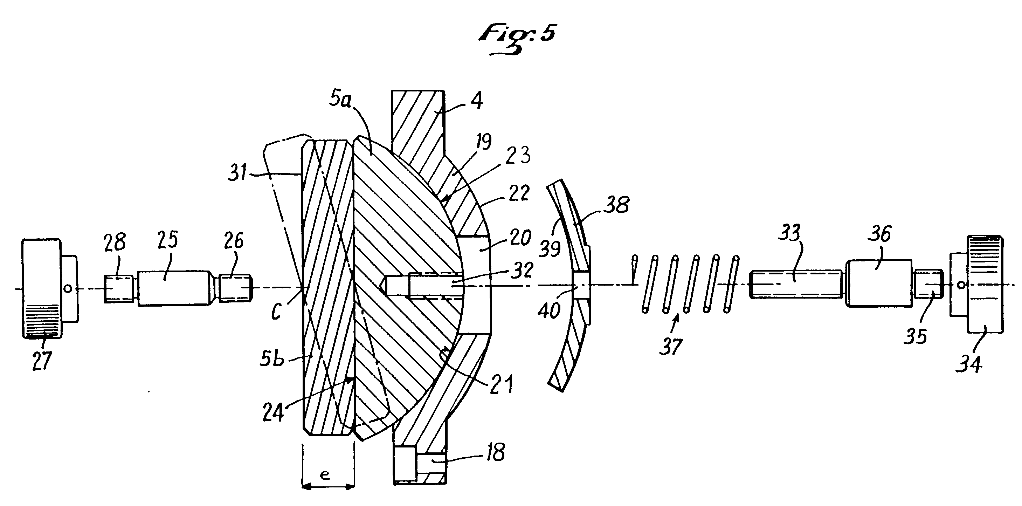

Sur les figures 10, 11 et 12, on a illustré schématiquement l'utilisation de trois outillages O1, O2, O3 du type de celui décrit en regard des figures 2 à 9, à la mise en place, sur le bâti 41, d'une plaque 42 comportant trois repères de positionnement R1, R2 et R3 devant occuper respectivement les positions spatiales coplanaires M1, M2 et M3, l'épaisseur de cette plaque 42 étant égale à celle e des disques 5b des rotules des trois outillages. De plus, ladite plaque comporte des trous 43 identiques, en diamètre et disposition, aux trous 29 des trois disques 5b et occupant, par rapport aux repères R1, R2 et R3 des positions relatives identiques à celles occupées par les trous 29 par rapport aux centres C1, C2 et C3.

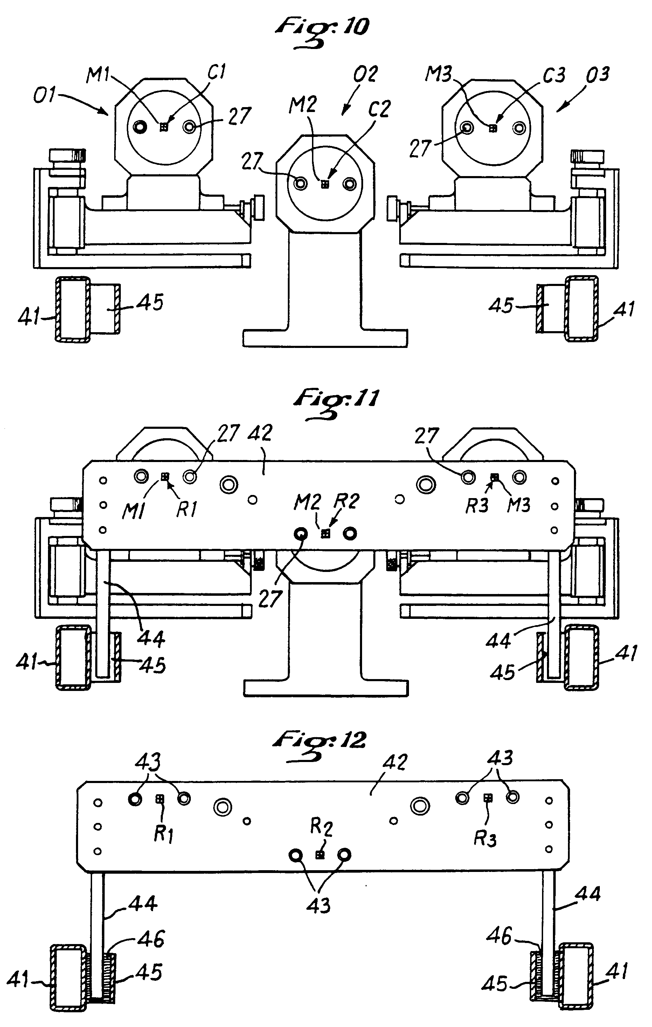

Dans cette utilisation, selon le processus décrit en regard de la figure 1, on amène successivement les centres C1, C2 et C3 des outillages O1, O2 et O3 en coïncidence respective avec les positions M1, M2 et M3 (figure 10). Ensuite, on démonte les parties 5b des trois rotules par dévissage des vis 26 par manoeuvre des têtes 27 et on fixe, sur les trois rotules, la plaque 42 au moyen des tenons 25 traversant alors les trous 43 de la plaque 42 et venant se revisser dans les trous filetés 30 des parties 5a. On conçoit aisément que les repères R1, R2 et R3 se trouvent alors respectivement en coïncidence avec les positions M1, M2 et M3 (figure 11).

On remarquera que, dans le cas -le plus fréquent- où les trois faces 24 des parties sphériques 5a ne sont pas coplanaires après mise en coïncidence des centres C1, C2, C3 avec les positions M1, M2, M3, une auto-correction se produit au moment de la fixation de la plaque 42 sur les parties sphériques 5a, puisque celles-ci peuvent être amenées à s'orienter par rapport à leur siège 4. Du fait que ces parties sphériques 5a tournent alors autour de leurs centres respectifs C1, C2 ou C3, il n'y a aucun déréglage de la coïncidence de ceux-ci avec les positions M1, M2 et M3. Au besoin, il est possible de vérifier le réglage des repères R1, R2 et R3 par mise en oeuvre du processus décrit en regard de la figure 1.

On voit qu'il est également possible, après mise en coïncidence des centres C1, C2 et C3 avec les positions M1, M2 et M3 de démonter complètement les rotules 5 desdits outillages O1, O2 et O3 (par manoeuvre des têtes 34) puis de séparer les parties 5a des parties 5b, de remplacer les parties 5b par la plaque 42, puis de remonter sur les sièges 4 l'ensemble de la plaque 42 et des parties 5a qui en sont solidaires.

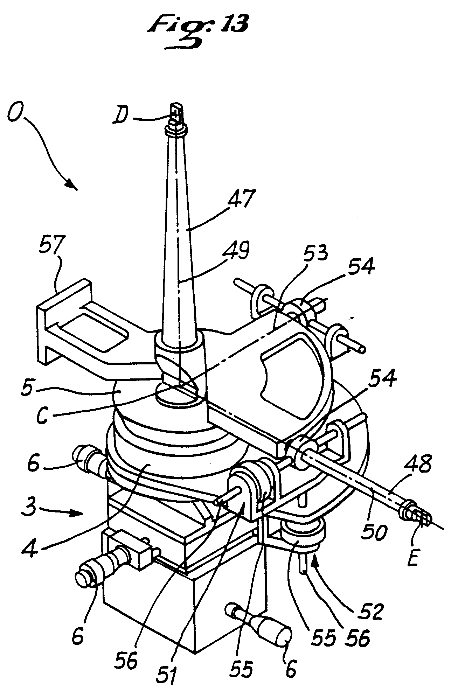

Après mise en coïncidence des repères R1, R2, R3 avec les positions M1, M2 et M3 (figure 11), il reste à fixer la plaque 42 du bâti 41. Ceci peut être fait par exemple, par scellement de pattes 44, solidaires de ladite plaque 42, dans des pots de scellement 45 dudit bâti 41, grâce à un moyen de scellement 46 (figure 12).

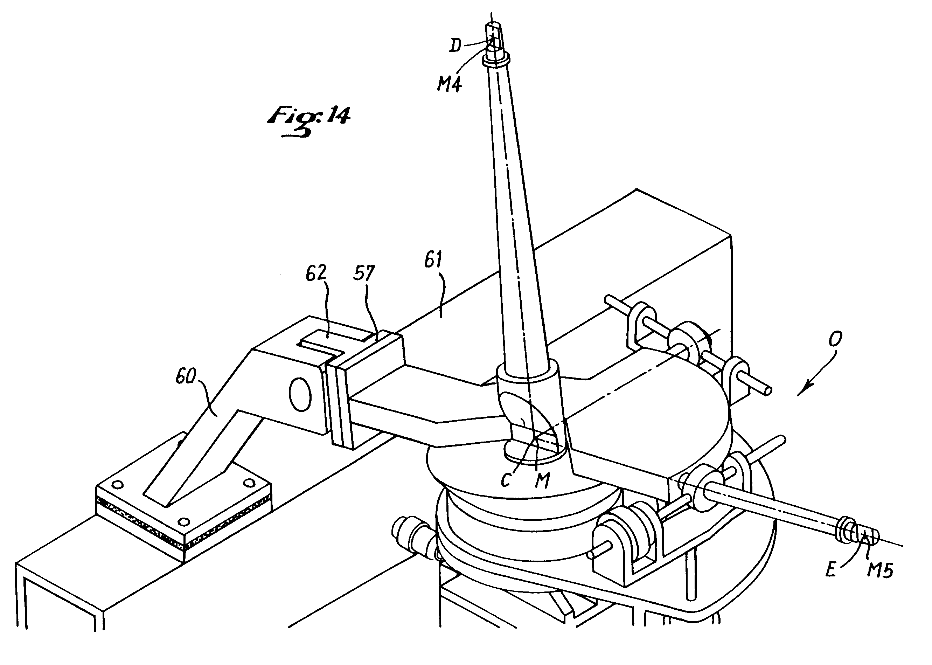

La variante de réalisation de l'outillage O selon l'invention, montrée par la figure 13, comporte, comme décrit ci-dessus, une table 3 à trois mouvements croisés X Y Z commandable par des organes de manoeuvre 6, un siège sphérique 4 et une rotule hémisphérique 5, dont le centre C est marqué. Elle comporte de plus deux bras rectangulaires 47 et 48 solidaires de la rotule 5 et portant à leurs extrémités libres respectives des marques D et E. Par exemple, la marque D se trouve sur l'axe de symétrie 49 de la rotule hémisphérique 5 et la marque E sur un axe diamétral 50 de ladite rotule, de sorte que les marques C, D et E définissent un plan diamétral axial de celle-ci. Par ailleurs, dans cette variante de réalisation, on a prévu des moyens 51 pour commander la rotation du bras 48 autour de l'axe 49, des moyens (non visibles sur la figure) pour commander la rotation du bras 47 autour de l'axe 50 et des moyens 52 pour commander la rotation des bras 47 et 48 autour d'un axe, orthogonal aux axes 49 et 50 et passant par le centre C. Ces différents moyens de commande en rotation comportent par exemple des paliers 54, et des molettes 55 coopérant avec des tiges filetées 56.

On voit ainsi que, grâce à ce dispositif, on peut matérialiser un plan de référence. On peut donc positionner de façon précise une face 57 liée à ladite rotule 5 et aux bras 47 et 48.

Sur la figure 14, on a illustré l'utilisation consistant à mettre en place, de façon précise, en position et en orientation, un organe de repère 60 en forme de chape sur un bâti 61.

Pour ce faire, on commence par déterminer théoriquement, dans un système d'axes de référence, les coordonnées des points M, M4 et M5 que devraient occuper respectivement le centre C et les marques D et E, dans le cas où ledit repère 60 étant correctement positionné, il serait lié à ladite face 57, éventuellement par l'intermédiaire d'un dispositif d'interface 62. Lorsque ces coordonnées sont déterminées, on amène le centre C de la rotule 5 à coïncider avec le point M, par la mise en oeuvre du processus décrit en regard de la figure 1. Puis, par basculement de l'ensemble 5, 47, 48 par rapport au siège 4, par exemple par commande des moyens 55, 56 et visée à l'aide de l'appareil 9, 10, 11, on amène successivement, par un processus semblable à celui mis en oeuvre pour la mise en place du centre M, les marques D et E, respectivement aux positions M4 et M5. On est alors sûr que la face 57 occupe la position appropriée. Il suffit ensuite de relier le repère 60 à ladite face 57, par l'intermédiaire du dispositif d'interface 62, pour que l'organe de repère 60 occupe sa position précise correcte par rapport au bâti 61. Il suffit alors de fixer l'organe de repère 60 sur le bâti 61, par tout moyen approprié.

## Revendications

1. Outillage (O) permettant de matérialiser un point dans l'espace,
caractérisé en ce qu'il comporte un châssis (2,3), dont au moins une partie (3) est mobile, et une rotule hémisphérique (5), montée dans un siège sphérique concave (4), solidaire de ladite partie mobile (3) dudit châssis, le centre (C) de ladite rotule (5) étant marqué.

2. Outillage selon la revendication 1,
caractérisé en ce que ladite partie mobile (3) du châssis (2,3) est constituée par une table à déplacements croisés.

3. Outillage selon l'une des revendications 1 ou 2,
caractérisé en ce que ladite rotule hémisphérique (5) est pressée élastiquement contre son siège (4).

4. Outillage selon la revendication 3,
caractérisé en ce qu'il comporte des moyens (32 à 36) permettant de régler la pression élastique de ladite rotule hémisphérique (5) contre son siège (4), de sorte que ladite rotule peut soit tourner par rapport audit siège, soit au contraire occuper une position fixe par rapport à celui-ci.

5. Outillage selon l'une des revendications 1 à 4,
caractérisé en ce que ladite rotule hémisphérique (5) est montée de façon amovible dans ledit siège (4).

6. Outillage selon l'une des revendications 1 à 5,
caractérisé en ce que la partie (5b) de ladite rotule hémisphérique (5), portant la marque du centre (C) de cette dernière, est amovible.

7. Outillage selon la revendication 6,
caractérisé en ce que ladite partie amovible (5b) de la rotule hémisphérique (5) se présente sous la forme d'un disque.

8. Outillage selon l'une des revendications 1 à 4,
caractérisé en ce que ladite rotule hémisphérique (5) est solidaire de deux bras (47,48), dont les extrémités libres portent chacune une marque de visée (D,E).

9. Outillage selon la revendication 8,
caractérisé en ce qu'il comporte des moyens (55,56) pour commander l'orientation de l'axe de symétrie (49) de ladite rotule (5) par rapport au siège (4).

10. Outillage selon l'une des revendications 8 ou 9,
caractérisé en ce que lesdites marques de visée (D,E) définissent, avec le centre (C) de la rotule (5), un plan diamétral de symétrie pour celle-ci.

11. Outillage selon l'une des revendications 8 à 10,
caractérisé en ce que l'une (D) desdites marques se trouve sur l'axe de symétrie (49) de ladite rotule (5) et en ce que l'autre (E) desdites marques se trouve sur un axe (50), orthogonal audit axe de symétrie (49) et passant par ledit centre (C) de la rotule.

12. Outillage selon l'une des revendications 8 à 11,
caractérisé en ce qu'il comporte une face de référence (57) solidaire de ladite rotule.

13. Utilisation de l'outillage selon la revendication 6, pour la mise en place d'un repère de positionnement ponctuel (R1,R2,R3) porté par un support,
caractérisée en ce que ledit support (42) du repère de positionnement est susceptible de remplacer ladite partie amovible (5b) de ladite rotule hémisphérique (5), portant la marque du centre (C) de cette dernière, de façon que ce repère se trouve à l'emplacement du centre de ladite rotule.

14. Utilisation de l'outillage selon la revendication 13, dans laquelle ledit outillage est conforme à la revendication 7, ladite partie amovible (5b) de la rotule hémisphérique (5) se présentant sous la forme d'un disque,
caractérisée en ce que ledit support (42) dudit repère de positionnement se présente sous la forme d'une plaque, de même épaisseur que ledit disque.

15. Utilisation de l'outillage selon l'une des revendications 13 ou 14, étendue à la mise en place d'un axe orienté défini par deux repères de positionnement ponctuels (R1,R2) portés par un support commun (42),
caractérisée en ce que l'on utilise deux outillages (O1,O2) et en ce que, après avoir amené les centres (C1,C2) des rotules (5) desdits outillages aux points (M1,M2) que doivent occuper lesdits repères de positionnement ponctuels, on substitue ledit support commun (42) matérialisant l'axe orienté aux parties amovibles (5b) desdites rotules de façon que chacun desdits repères de positionnement se trouve à l'emplacement du centre de la rotule correspondante.

16. Utilisation de l'outillage selon l'une des revendications 13 ou 14, étendue à la mise en place d'un ensemble structural comportant trois repères de positionnement ponctuels (R1,R2,R3) portés par un support commun (42),
caractérisée en ce qu'on utilise trois outillages (O1,O2,O3) et en ce que, après avoir amené les centres (C1,C2,C3) des rotules (5) desdits outillages aux points (M1,M2,M3) que doivent occuper respectivement lesdits repères de positionnement ponctuels, on substitue ledit support commun (42) aux parties amovibles (5b) desdites rotules de façon que chacun desdits repères de positionnement se trouve à l'emplacement du centre de la rotule correspondante.

17. Utilisation de l'outillage selon l'une quelconque des revendications 8 à 11 pour matérialiser un plan passant par un point (M) dont les coordonnées (x,y,z) dans un système d'axes de référence (OX,OY,OZ) sont connues.

18. Utilisation de l'outillage selon la revendication 12, destinée à la mise en place d'un organe de référence (60), caractérisée en ce que ladite face de référence (57) solidaire de ladite rotule est susceptible de porter ledit organe de référence.

## Claims

1. Tooling (O) making it possible to materialize a point in space,
characterized in that it includes a framework (2,3), at least a part (3) of which is movable, and a hemispherical swivel (5) mounted in a concave spherical seat (4) secured to the said movable part (3) of the said framework, the centre (C) of the said swivel (5) being marked.

2. Tooling according to Claim 1,
characterised in that the said movable part (3) of the framework (2,3) is made up of a cross table.

3. Tooling according to one of Claims 1 and 2,
characterized in that the said hemispherical swivel (5) is pressed elastically against its seat (4).

4. Tooling according to Claim 3,
characterized in that it includes means (32 to 36) making it possible to adjust the elastic pressure of the said hemispherical swivel (5) against its seat (4), so that the said swivel can either rotate with respect to the said seat, or, in contrast, occupy a fixed position with respect to the latter.

5. Tooling according to one of Claims 1 to 4,
characterized in that the said hemispherical swivel (5) is mounted removably in the said seat (4).

6. Tooling according to one of Claims 1 to 5,
characterized in that the part (5b) of the said hemispherical swivel (5) bearing the mark of the centre (C) of the latter, is removable.

7. Tooling according to Claim 6,
characterized in that the said removable part (5b) of the hemispherical swivel (5) is in the form of a disc.

8. Tooling according to one of Claims 1 to 4,
characterized in that the said hemispherical swivel (5) is secured to two arms (47,48), the free ends of which each bear a sighting mark (D,E).

9. Tooling according to Claim 8,
characterized in that it includes means (55,56) for controlling the orientation of the axis of symmetry (49) of the said swivel (5) with respect to the seat (4).

10. Tooling according to one of Claims 8 and 9,
characterized in that the said sighting marks (D,E) define, together with the centre (C) of the swivel (5), a diametral plane of symmetry for the latter.

11. Tooling according to one of Claims 8 to 10,
characterized in that one (D) of the said marks is on the axis of symmetry (49) of the said swivel (5), and in that the other (E) of the said marks is on an axis (50) orthogonal to the said axis of symmetry (49) and passing through the said centre (C) of the swivel.

12. Tooling according to one of Claims 8 to 11,
characterized in that it includes a reference face (57) secured to the said swivel.

13. Use of the tooling according to Claim 6, for the setting up of a point-type positioning marking (R1,R2,R3) borne by a support,
characterized in that the said support (42) of the positioning marking is capable of replacing the said removable part (5b) of the said hemispherical swivel (5), bearing the mark of the centre (C) of the latter, so that this marking can be found at the location of the centre of the said swivel.

14. Use of the tooling according to Claim 13, in which the said tooling is in accordance with Claim 7, the said removable part (5b) of the hemispherical swivel (5) being in the form of a disc,
characterized in that the said support (42) of the said positioning marking is in the form of a plate, with the same thickness as the said disc.

15. Use of the tooling according to one of Claims 13 and 14, extended to the setting-up of an orientated axis defined by two point-type positioning markings (R1,R2) borne by a common support (42),
characterized in that two pieces of tooling (O1,O2) are used and in that, after having brought the centres (C1,C2) of the swivels (5) of the said pieces of tooling to the points (M1,M2) which the said point-type positioning markings are to occupy, the said common support (42), materializing the orientated axis, is substituted for the removable parts (5b) of the said swivels so that each of the said positioning markings can be found at the location of the centre of the corresponding swivel.

16. Use of the tooling according to one of Claims 13 and 14, extended to the setting-up of a structural assembly including three point-type positioning markings (R1,R2,R3) borne by a common support (42),
characterized in that three pieces of tooling (O1,O2,O3) are used and in that, after having brought the centres (C1,C2,C3) of the swivels (5) of the said pieces of tooling to the points (M1,M2,M3) which the said point-type positioning markings are to occupy respectively, the said common support (42), is substituted for the removable parts (5b) of the said swivels so that each of the said positioning markings can be found at the location of the centre of the corresponding swivel.

17. Use of the tooling according to any one of Claims 8 to 11 in order to materialize a plane passing through a point (M), the coordinates (x,y,z) of which, within a reference axes system (OX,OY,OZ) are known.

18. Use of the tooling according to Claim 12, intended for the setting-up of a reference member (60), characterized in that the said reference face (57) secured to the said swivel is capable of bearing the said reference member.

## Patentansprüche

1. Werkzeugvorrichtung (O) zur Verwirklichung eines räumlichen Punktes,
dadurch gekennzeichnet, daß sie ein Gestell (2,3) hat, von dem mindestens ein Teil (3) beweglich ist, und ein Halbkugelgelenk (5), das in einem konkaven kugelförmigen Sitz (4) angebracht ist, der mit dem beweglichen Teil (3) des Gestells verbunden ist, wobei der Mittelpunkt (C) von Kugelgelenk (5) markiert ist.

2. Werkzeugvorrichtung nach Anspruch 1,
dadurch gekennzeichnet, daß der bewegliche Teil (3) des Gestells (2,3) aus einem Kreuztisch besteht.

3. Werkzeugvorrichtung nach einem der Ansprüche 1 oder 2,
dadurch gekennzeichnet, daß die Halbkugel (5) elastisch gegen ihren Sitz (4) gedrückt wird.

4. Werkzeugvorrichtung nach Anspruch 3,
dadurch gekennzeichnet, daß es Mittel (32 bis 36) hat, mit denen der elastische Druck der Halbkugel (5) gegen ihren Sitz (4) geregelt werden kann, so daß sich die Kugel entweder gegenüber ihrem Sitz drehen oder eine feste Stellung zu diesem einnehmen kann.

5. Werkzeugvorrichtung nach einem der Ansprüche 1 bis 4,
dadurch gekennzeichnet, daß das Halbkugelgelenk (5) abnehmbar in Sitz (4) angebracht ist.

6. Werkzeugvorrichtung nach einem der Ansprüche 1 bis 5,
dadurch gekennzeichnet, daß Teil (5b) von Halbkugelgelenk (5) mit der Markierung seines Mittelpunkts (C) abnehmbar ist.

7. Werkzeugvorrichtung nach Anspruch 6,
dadurch gekennzeichnet, daß der abnehmbare Teil (5b) des Halbkugelgelenks (5) die Form einer Scheibe hat.

8. Werkzeugvorrichtung nach einem der Ansprüche 1 bis 4,
dadurch gekennzeichnet, daß das Halbkugelgelenk (5) mit zwei Armen (47,48) verbunden ist, an deren freien Enden sich jeweils eine Visiermarke (D,E) befindet.

9. Werkzeugvorrichtung nach Anspruch 8,
dadurch gekennzeichnet, daß sie Mittel (55,56) hat, um die Ausrichtung der Symmetrieachse (49) der Kugel (5) gegenüber Sitz (4) zu steuern.

10. Werkzeugvorrichtung nach einem der Ansprüche 8 oder 9,
dadurch gekennzeichnet, daß die Visiermarken (D,E) mit dem Mittelpunkt (C) von Kugelgelenk (5) zu diesem eine diametrale Symmetrieebene bilden.

11. Werkzeugvorrichtung nach einem der Ansprüche 8 bis 10,
dadurch gekennzeichnet, daß sich eine (D) der Marken dauf der Symmetrieachse (49) von Kugelgelenk (5) befindet, und dadurch, daß sich die andere (E) der Marken auf einer durch den Mittelpunkt (C) des Kugelgelenks senkrecht zur Symmetrieachse (49) verlaufenden Achse (50) befindet.

12. Werkzeugvorrichtung nach einem der Ansprüche 8 bis 11,
dadurch gekennzeichnet, daß sie eine mit dem Kugelgelenk verbundene Bezugsfläche (57) hat.

13. Anwendung der Werkzeugvorrichtung nach Anspruch 6 zur Anbringung einer punktförmigen Positionierungsmarke (R1,R2,R3) auf einer Unterlage,
dadurch gekennzeichnet, daß die Unterlage (42) der Positionierungsmarke den abnehmbaren Teil (5b) des Halbkugelgelenks (5) mit der Markierung des Mittelpunkts (C) desselben ersetzen kann, so daß sich diese Marke an der Stelle des Mittelpunkts des Kugelgelenks befindet.

14. Anwendung der Werkzeugvorrichtung nach Anspruch 13, bei dem die Werkzeugvorrichtung Anspruch 7 entspricht, wobei der abnehmbare Teil (5b) des Halbkugelgelenks (5) die Form einer Scheibe hat,
dadurch gekennzeichnet, daß die Unterlage (42) der Positionierungsmarke die Form einer Platte von der gleichen Dicke wie die Scheibe hat.

15. Anwendung der Werkzeugvorrichtung nach einem der Ansprüche 13 oder 14, erweitert auf die Anbringung einer durch zwei punktförmige Positionierungsmarken (R1,R2) auf einer gemeinsamen Unterlage (42) definierten ausgerichteten Achse,
dadurch gekennzeichnet, daß zwei Werkzeugvorrichtungen (01,02) eingesetzt werden, und dadurch, daß, nachdem die Mittelpunkte (C1,C2) der Kugelgelenke (5) der Werkzeugvorrichtungen auf die von den punktförmigen Positionierungsmarken einzunehmenden Punkte (M1,M2) eingestellt wurden, die abnehmbaren Teile (5b) der Kugelgelenke durch die gemeinsame Unterlage (42) mit der verwirklichten ausgerichteten Achse ersetzt werden, so daß sich jede Positionierungsmarke an der Stelle des Mittelpunkts des entsprechenden Kugelgelenks befindet.

16. Anwendung der Werkzeugvorrichtung nach einem der Ansprüche 13 oder 14, erweitert auf die Anbringung einer Baueinheit mit drei punktförmigen Positionierungsmarken (R1,R2,R3) auf einer gemeinsamen Unterlage (42),
dadurch gekennzeichnet, daß drei Werkzeugvorrichtungen (01,02,03) verwendet werden, und dadurch, daß, nachdem die Mittelpunkte (C1,C2,C3) der Kugelgelenke (5) der Werkzeugausrüstungen auf die von den punktförmigen Positionierungsmarken jeweils einzunehmenden Punkte (M1,M2,M3) eingestellt wurden, die abnehmbaren Teile (5b) der Kugelgelenke durch die gemeinsame Unterlage (42) ersetzt werden, so daß sich jede der Positionierungsmarken an der Stelle des Mittelpunkts des entsprechenden Kugelgelenks befindet.

17. Anwendung der Werkzeugvorrichtung nach einem der Ansprüche 8 bis 11 zur Verwirklichung einer durch einen Punkt (M) verlaufenden Ebene, deren Koordinaten (x,y,z) in einem Bezugsachsensystem (OX,OY,OZ) bekannt sind.

18. Anwendung der Werkzeugvorrichtung nach Anspruch 12 für die Anbringung eines Bezugselements (60),
dadurch gekennzeichnet, daß sich das Bezugselement auf der mit dem Kugelgelenk verbundenen Bezugsfläche (57) befinden kann.
